# EUROPÄISCHE PATENTSCHRIFT

(11) **EP 1 815 158 B1**
(45) Veröffentlichungstag und Bekanntmachung des Hinweises auf die Patenterteilung: **08.10.2008**
(21) Anmeldenummer: 05801899.5
(22) Anmeldetag: 09.11.2005
(51) Int. Cl.: F16D 55/227

(54) **SCHEIBENBREMSE, INSBESONDERE FÜR EIN NUTZFAHRZEUG**
BRAKE DISK, IN PARTICULAR FOR A UTILITY VEHICLE
DISQUE DE FREIN, EN PARTICULIER POUR VEHICULES AUTOMOBILES

(30) Priorität: 17.11.2004 DE 102004055527
(43) Veröffentlichungstag der Anmeldung: 08.08.2007
(73) Patentinhaber: KNORR-BREMSE SYSTEME FÜR NUTZFAHRZEUGE GMBH, 80809 München (DE)
(72) Erfinder: SALAPIC, Borislav, 80636 München (DE)
(74) Vertreter: Mattusch, Gundula
(86) Internationale Anmeldenummer: PCT/EP2005/011978
(87) Internationale Veröffentlichungsnummer: WO 2006/053660

(56) Entgegenhaltungen:
- DE-A- 3 425 158
- DE-A1- 3 425 158
- DE-A1- 3 544 362
- US-A- 4 214 648
- US-A- 2002 020 590
- US-A1- 2002 020 590

## Beschreibung

Die vorliegende Erfindung betrifft eine Scheibenbremse, insbesondere für ein Nutzfahrzeug, entsprechend dem Oberbegriff des Anspruchs 1, wie z.B aus DE-A-34 25 158 bekannt.

Bei derartigen Scheibenbremsen wird der Bremssattel durch Befestigungselemente mit dem Bremsträger, der an das Fahrzeug angeschlossen ist, verbunden.

Dabei sind Führungsholme in den Bremsträger eingeschraubt, die andererseits in als Gleitlager ausgebildeten Lagerstellen des Bremssattels so geführt sind, dass eine axiale Verschiebung des Bremssattels zum ortsfesten Bremsträger möglich ist. Üblicherweise ist von den Gleitlagern eines als Festlager mit geringem Gleitspiel ausgebildet, während das andere als Loslager fungiert, wodurch insbesondere Fertigungstoleranzen ausgeglichen werden.

Durch die beim Zuspannen der Bremse, also beim Anpressen der Bremsbeläge an die Bremsscheibe auftretenden Reibkräfte wird ein Drehmoment erzeugt, das auf den Bremssattel einwirkt und über die Lagerstelle an den Führungsholm übertragen wird. Dabei wird insbesondere der Gewindeschaft auf Zug beansprucht, wodurch sich eine Reihe von Problemen ergeben.

Zur Aufnahme der auftretenden Belastung muss der Gewindeschaft entsprechend groß dimensioniert sein. Dies bedingt naturgemäß ein entsprechendes Raumangebot.

Forderungen gehen jedoch dahin, die Abmaße insgesamt zu minimieren, um so kleinere Bauformen zu erreichen.

Mit den bisher bekannten Lösungen sind diese Forderungen nur mit einer Verkleinerung des Querschnitts beispielsweise des Schraubenschaftes realisierbar, wodurch naturgemäß die Belastungsfähigkeit der Befestigungselemente abnimmt.

In diesem Falle besteht die Gefahr, dass der Schraubenschaft bricht, was insbesondere unter sicherheitstechnischen Aspekten inakzeptabel ist. Darüber hinaus ist naturgemäß die Standzeit eingeschränkt, wodurch sich erhebliche wirtschaftliche Nachteile ergeben.

Der vorliegenden Erfindung liegt daher die Aufgabe zugrunde, eine Scheibenbremse der gattungsgemäßen Art so weiter zu entwickeln, dass die Belastungsfähigkeit der Befestigungselemente optimiert wird.

Diese Aufgabe wird durch eine Scheibenbremse gelöst, die die Merkmale des Anspruchs 1 aufweist.

Durch diese konstruktive Ausgestaltung wird quasi der wirksame, das Drehmoment bestimmende Hebelarm verlängert, so dass die auf den Gewindeschaft wirkende Kraft reduziert wird.

Hierdurch kann der Gewindeschaft in seinem Querschnitt minimiert werden, ohne eine Einschränkung der Belastungsfähigkeit.

Entscheidend ist dabei, dass die Achse des Schraubenschaftes zur gedachten Mitte des Bremssattels hin gegenüber der Achse der Lagerstelle abständig ist, bzw. zum gedachten Äußeren bei Umkehrung der Drehrichtung.

Durch die Erfindung wird eine Quasi-Steigerung der Reaktionskraft des Schraubenschaftes erreicht und die Bremse insgesamt optimiert. Dies unabhängig von dem Reibungskoeffizenten der Reibpaarung Bremsbelag/Bremsscheibe.

Nach einer vorteilhaften Weiterbildung der Erfindung ist vorgesehen, den Führungsholm als eine Führungsbuchse und eine darin geführte Schraube auszubilden, die mit ihrem Schaftende als Gewindeschaft in den Bremsträger eingeschraubt ist.

Die Aufnahmebohrung der Führungsbuchse für die eingesteckte Schraube ist dabei exzentrisch vorgesehen, das heißt, die Mittelachse dieser Einsteckbohrung ist abständig zur Mittelachse der Führungsbuchse im übrigen.

Diese konstruktive Weiterbildung der Erfindung erlaubt eine äußerst preiswerte Herstellung und Montage des eine Baueinheit bildenden Führungsholms, wobei die Führungsbuchse als Körper zylindrisch ausgebildet ist.

Die Montage wird bei dieser Ausführungsform vor allem deshalb vereinfacht, weil die Schraube in die in der Lagerstelle einliegende Führungsbuchse gedreht werden kann, ohne dass sich die Führungsbuchse selbst mitdreht.

Um die Exzentrität in der vorbestimmten Stellung zu halten, ist es sinnvoll, die Führungsbuchse in der Lagerstelle verdrehsicher anzuordnen und überdies lagegenau zu positionieren. Hierzu können die Führungsbuchse und die Lagerstelle konstruktiv entsprechend ausgestaltet sein.

Die Ausrichtung der beiden Achsen, also in diesem Fall der Mittelachse der Führungsbuchse einerseits und der Mittelachse der Schraube bzw. der Einstecköffnung quer zur Längserstreckung ist den Erfordernissen angepasst, wobei die Abstandsebene zwischen den beiden Mittelachsen radial nach oben oder unten verlaufen kann oder ausgerichtet auf das weitere Befestigungselement derselben Seite, so dass die Abstandsebenen der beiden Befestigungselemente in einer gemeinsamen Ebene liegen.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäßen Scheibenbremse in einer teilweise geschnittenen Draufsicht
- Figur 2: eine Einzelheit der Scheibenbremse ebenfalls in einer geschnittenen Draufsicht

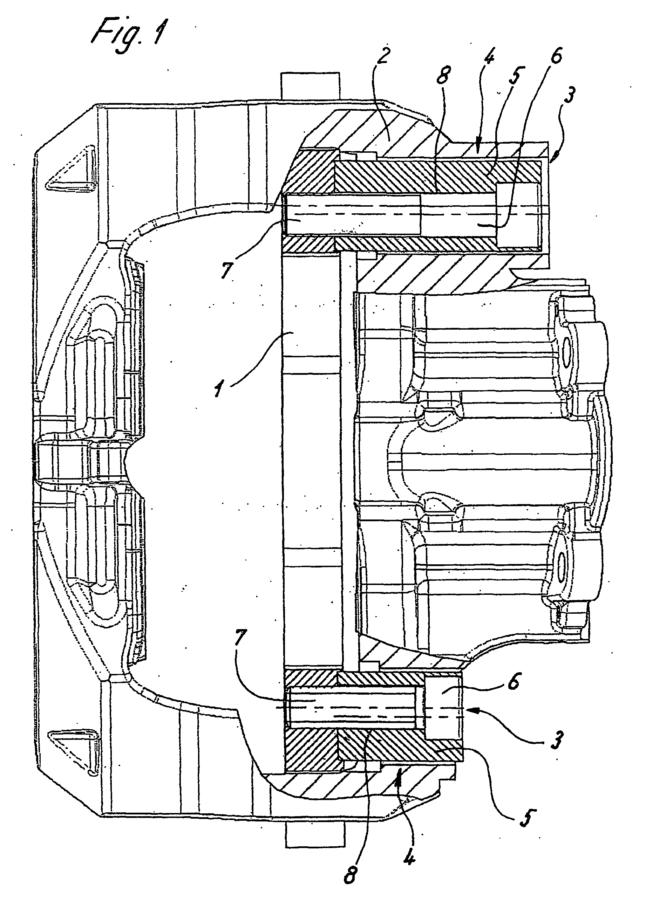

In der Figur 1 ist eine Scheibenbremse, insbesondere für ein Nutzfahrzeug dargestellt, die einen Bremssattel 2 aufweist, der eine nicht dargestellte Bremsscheibe zumindest in einem Umfangsrandbereich umgreift oder übergreift.

Der Bremssattel 2 ist durch Befestigungselemente 3 an einem Bremsträger 1 befestigt, der in montierter Stellung ortsfest an dem Fahrzeug angeschlossen ist.

Die Befestigungselemente 3 sind beispielsweise als Los- oder Festlager ausgebildet und bestehen jeweils aus einer Führungsbuchse 5 sowie einer Schraube 6, deren Gewindeschaft zumindest teilweise in den Bremsträger 1 eingeschraubt ist. Die Baueinheit Führungsbuchse 5 / Schraube 6 bildet dabei einen Führungsholm, auf dem der Bremssattel 2 axial verschiebbar gelagert ist, wozu der Bremssattel 2 eine Lagerstelle 4, vorzugsweise als Gleitlager, aufweist.

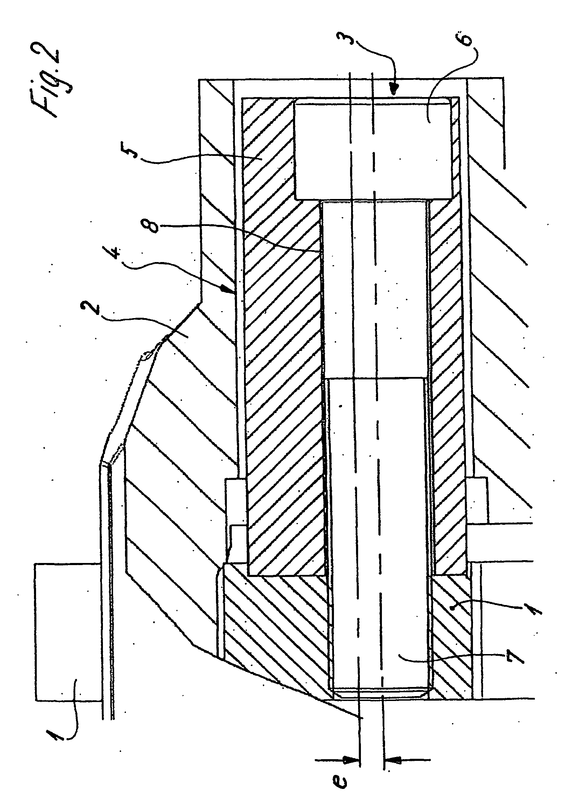

Wie insbesondere die Figur 2, eine vergrößerte Darstellung des in der Figur 1 oberen Befestigungselementes 3, zeigt, ist die Führungsbuchse 5 mit einer Einsteckbohrung 8 versehen, in die die Schraube 6 eingesteckt ist. Diese Einsteckbohrung 8 ist exzentrisch zur Mittelachse der im übrigen zylindrischen Führungsbuchse 5 angeordnet, so dass die eingesteckte Schraube mit ihrer Längsachse abständig zur Mittelachse der Führungsbuchse 5, die gleichzeitig die Mittelachse der Lagerstelle 4 ist, verläuft. Dieser Abstand ist in der Figur 2 mit e bezeichnet.

Die Achsen der beiden Schrauben 6 sind dabei, wie besonders aus der Figur 1 vorgeht, jeweils in Richtung zur Mitte des Bremssattels 2 hin abständig zur Achse der Lagerstelle 4 bzw. der Führungsbuchse 5 verlagert.

Das Maß des Abstandes e wird dabei bestimmt vom Querschnittsabmaß der Führungsbuchse 5 bzw. den herrschenden Platzverhältnissen.

Prinzipiell beschränkt sich die Erfindung nicht auf das dargestellte Ausführungsbeispiel, sondern kann auch bei einer Scheibenbremse mit zwei Festlagern und nur einem Loslager oder mit einem Festlager und zwei Loslagern Verwendung finden.

### Bezugszeichenliste

- 1: Bremsträger
- 2: Bremssattel
- 3: Befestigungselement
- 4: Lagerstelle
- 5: Führungsbuchse
- 6: Schraube
- 7: Gewindeschaft
- 8: Einsteckbohrung

## Patentansprüche

1. Scheibenbremse, insbesondere für ein Nutzfahrzeug, mit einem eine Bremsscheibe zumindest in einem Umfangsrandbereich umgreifenden oder übergreifenden Bremssattel (2), der an einem Bremsträger (1) durch Befestigungselemente (3) befestigt ist, wobei jedes Befestigungselement (3) einen in einer Lagerstelle (4) des Bremssattels (2) gelagerten Führungsholm aufweist, der mit einem Gewindeschaft (7) in den Bremsträger (1) eingeschraubt ist und auf dem der Bremssattel (2), bezogen auf die Bremsscheibe, axial verschiebbar ist, **dadurch gekennzeichnet, dass** die Längsachse des in den Bremsträger (1) eingeschraubten Gewindeschaftes (7) parallel und mit Abstand zur Längsachse der Lagerstelle (3) des Bremssattels (2) verläuft.

2. Scheibenbremse nach Anspruch 1, **dadurch gekennzeichnet, dass** die Längsachse des Gewindeschaftes (7) in Richtung der Mittelachse des Bremssattels (2) abständig zur Längsachse der Lagerstelle (3) ist.

3. Scheibenbremse nach Anspruch 1 oder 2, **dadurch gekennzeichnet, dass** die Längsachsen aller Lagerstellen (3) zumindest einer Seite des Bremssattels zusammen mit den Längsachsen der zugeordneten Lagerstellen (3) in einer Ebene angeordnet sind.

4. Scheibenbremse nach einem der vorhergehenden Ansprüche, **dadurch gekennzeichnet, dass** der Führungsholm aus einer Führungsbuchse (5) und einer eingesteckten, in den Bremsträger (1) eingeschraubten Schraube (6) besteht.

5. Scheibenbremse nach einem der vorhergehenden Ansprüche, **dadurch gekennzeichnet, dass** die Schraube (6) in eine Einsteckbohrung (8) der Führungsbuchse (5) eingesteckt ist, die gegenüber der Mittelachse der zylindrischen Führungsbuchse (5) exzentrisch angeordnet ist.

6. Scheibenbremse nach einem der vorhergehenden Ansprüche, **dadurch gekennzeichnet, dass** die Führungsbuchse (5) verdrehsicher oder weitgehend verdrehsicher gegenüber der Lagerstelle (4) gehalten ist.

7. Scheibenbremse nach einem der vorhergehenden Ansprüche, **dadurch gekennzeichnet, dass** die Führungsbuchse (5) in einer vorbestimmten Position gegenüber der Lagerstelle (4) gehalten ist.

## Claims

1. Disc brake, in particular for a commercial vehicle, comprising a brake calliper (2) enclosing or reaching over a brake disc, at least in a peripheral zone, which brake calliper (2) is fastened on a brake anchor plate (1) by means of fastening elements (3), with each fastening element (3) including a guiding string piece supported at a bearing site (4) of said brake calliper (2), which is screwed by a threaded shaft (7) into said brake anchor plate (1) and on which said brake calliper (2) is disposed for axial displacement, relative to said brake disc, **characterised in that** the longitudinal axis of said threaded shaft (7) screwed into said brake anchor plate (1) extends in parallel to and is spaced from the longitudinal axis of the bearing site (3) of said brake calliper (2).

2. Disc brake according to Claim 1, **characterised in that** the longitudinal axis of said threaded shaft (7) is spaced from the longitudinal axis of said bearing site (3) in a direction towards the centre axis of said brake calliper (2).

3. Disc brake according to Claim 1 or 2, **characterised in that** the longitudinal axes of all bearing sites (3) on at least one side of said brake calliper are arranged in a single plane, together with the longitudinal axes of the associated bearing sites (3).

4. Disc brake according to any of the preceding Claims, **characterised in that** said guiding string piece consists of a guiding bush (5) and a screw (6) inserted therein and screwed into said brake anchor plate (1).

5. Disc brake according to any of the preceding Claims, **characterised in that** said screw (6) is inserted into a plug-in bore (8) of said guiding bush (5), which is disposed eccentrically in opposition to the centre axis of said cylindrical guiding bush (5).

6. Disc brake according to any of the preceding Claims, **characterised in that** said guiding bush (5) is retained so as to protect it or largely protect it from twisting relative to said bearing site (4).

7. Disc brake according to any of the preceding Claims, **characterised in that** said guiding bush (5) is retained in a predetermined position relative to said bearing site (4).

## Revendications

1. Frein à disque, en particulier d'un véhicule utilitaire, comprenant un étrier de frein (2) chevauchant ou renfermant un disque de frein, au moins dans une zone périphérique, cet étrier de frein (2) étant fixé à une flasque de frein (1) moyennant des éléments de fixation (3), à chaque élément de fixation (3) comprenant un élément de liaison de guidage logé à un point d'appui (4) dudit étrier de frein (2), qui est vissé, moyennant une tige filetée (7) dans ladite flasque de frein (1) et sur lequel est disposé ledit étrier de frein (2) de façon à être déplaçable relativement audit disque de frein, **caractérisé en ce que** l'axe longitudinal de ladite tige filetée (7) vissée dans ladite flasque de frein (1) s'étend en parallèle à l'axe longitudinal des points d'appui (3) dudit étrier de frein (3), en étant espacé du dernier.

2. Frein à disque selon la revendication 1, **caractérisé en ce que** l'axe longitudinal de ladite tige filetée (7) est espacée de l'axe longitudinal dudit point d'appui (3) en un sens vers l'axe central dudit étrier de frein (2).

3. Frein à disque selon la revendication 1 ou 2, **caractérisé en ce que** les axes longitudinaux de tous les points d'appui (3) à au moins un côté dudit étrier de frein sont disposés dans un seul plan, ensemble avec les axes longitudinaux des points d'appui (3) affectés.

4. Frein à disque selon une quelconque des revendications précédentes, **caractérisé en ce que** ledit élément de liaison de guidage consiste en une douille de guidage (5) et une vis (6) y insérée et vissée dans ladite flasque de frein (1).

5. Frein à disque selon une quelconque des revendications précédentes, **caractérisé en ce que** ladite vis (6) est insérée dans un alésage d'introduction (8) de ladite douille de guidage (5), qui est disposé en une position excentrique en opposition à l'axe central de ladite douille de guidage cylindrique (5).

6. Frein à disque selon une quelconque des revendications précédentes, **caractérisé en ce que** ladite douille de guidage (5) est retenue d'une manière, qu'elle soit protégée, ou largement protégée, contre la torsion relative audit point d'appui (4).

7. Frein à disque selon une quelconque des revendications précédentes, **caractérisé en ce que** ladite douille de guidage (5) est retenue d'une manière, qu'elle soit en une position prédéterminée relative audit point d'appui (4).
